# FASCICULE DE BREVET EUROPEEN

(11) **EP 0 766 913 B1**
(45) Date de publication et mention de la délivrance du brevet: **03.01.2001**
(21) Numéro de dépôt: 96401953.3
(22) Date de dépôt: 12.09.1996
(51) Int. Cl.: A01G 11/00, B32B 27/32, C08L 77/02

(54) **Procédé de traitement des sols par fumigation**
Verfahren zur Begasungsbodenbehandlung
Method for treating soils by fumigation

(30) Priorité: 05.10.1995 FR 9511698
(43) Date de publication de la demande: 09.04.1997
(73) Titulaire: Atofina, 92800 Puteaux (FR)
(72) Inventeur: Basset, Dominique, 27300 Bernay (FR); Corbic-Bellinger, Marie-Pierre, 78800 Houilles (FR); Echalier, Bruno, 75006 Paris (FR)
(74) Mandataire: Neel, Henry

(56) Documents cités:
- EP-A- 0 268 422
- EP-A- 0 277 839
- EP-A- 0 342 066
- EP-A- 0 380 123
- EP-A- 0 440 557
- EP-A- 0 564 338
- EP-A- 0 595 706
- EP-A- 0 613 773
- US-A- 4 612 221
- US-A- 4 819 374
- US-A- 5 070 145
- DATABASE WPI Week 8404 Derwent Publications Ltd., London, GB; AN 84-020646 XP002003124 & JP 58 211 450 A (TOKAN KOGYO)

## Description

La présente invention concerne un procédé de traitement des sols par fumigation.

Le traitement des sols par fumigation consiste à injecter des gaz dans le sol, avant les semences ou les plantations, pour désinfecter la terre puis on recouvre le sol avec un film d'une matière plastique pour retenir ces gaz dans le sol et ainsi les laisser agir.

On peut utiliser par exemple le bromure de méthyle, le 1,3-dichloropropène, le chlorure de méthyle, le 3.5-diméthyltétrahydro-1.3.5-thiadiazin-2-thion, le tétrathiocarbonate de sodium ou le métham-sodium (CH₃NHCS.S Nₐ).

EP 30793 a décrit pour la fumigation au bromure de méthyle ou à la chloropicrine des films constitués d'un bicouche Polyamide-6/copolymère éthylène, octène-1.Ce film est décrit comme étant plus étanche aux gaz de fumigation qu'un film de polyéthylène basse densité. On peut aussi réduire la quantité de gaz à utiliser.

AU 92 11107 décrit aussi des bicouches polyéthylène/couche barrière dans cette application. La couche barrière peut être en Polyamide, polyéthylène téréphtalate, EVOH (copolymère éthylène alcool vinylique) ou polyuréthane. De préférence, un liant de coextrusion est disposé entre les deux couches.

La demanderesse a découvert que des films à base d'un mélange de polyamide et de polyoléfine étaient beaucoup plus barrière aux fumigants qu'un film en polyamide ou qu'un film en polyoléfine.

La présente invention est donc un procédé de traitement d'un sol agricole par fumigation dans lequel on dispose un film sur le sol agricole dans lequel on a injecté un fumigant caractérisé en ce que ledit film est constitué d'une couche (A) d'un mélange comprenant au moins un polyamide et au moins une polyoléfine. Selon une première variante, le film comprend la couche (A) précédente et une couche (B) constituée essentiellement d'une polyoléfine. Selon une deuxième variante, le film comprend la couche (A) précédente disposée entre deux couches (B).

On peut éventuellement dans les deux variantes disposer un liant de coextrusion entre les couches (A) et (B).

En plus des propriétés barrière, un avantage des films utilisés dans l'invention est qu'on peut les extruder facilement en grandes largeurs sur des machines utilisées pour le polyéthylène alors que les films de polyamide nécessitent un profil particulier de la vis d'extrusion.

Un autre avantage des films utilisés dans l'invention est que l'adhésion entre la couche (A) et la couche (B), sans utiliser de liant entre ces couches, est de 10 à 30 g/15 mm alors que dans le cas d'un film de polyamide, l'adhésion avec la couche (B) est zéro ou presque. Cette adhésion est mesurée par pelage à 180° C avec une vitesse de 200 mm/mn sur une largeur de 15 mm.

Un autre avantage est la résistance mécanique, quand on marche sur le film posé sur le sol, il ne se perce pas alors qu'un film en polyamide de même épaisseur se perce.

Un autre avantage par comparaison avec un film en polyéthylène est qu'on peut réduire la quantité de fumigant tout en ayant la même efficacité biologique.

S'agissant du film (A) constitué d'un mélange comprenant au moins un polyamide et au moins une polyoléfine, on entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylène-diamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
ou des mélanges de tous ces monomères ce qui conduit à des copolyamides.

On peut utiliser des mélanges de polyamide. On utilise avantageusement le PA-6.

On entend par polyoléfines des polymères comprenant des motifs oléfines tels que par exemple des motifs éthylène, propylène, butène-1, etc...

A titre d'exemple, on peut citer :
- le polyéthylène, le polypropylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides (iv) les époxydes insaturés.

Ces copolymères de l'éthylène pouvant être greffés par des anhydrides d'acides dicarboxyliques insaturés ou des époxydes insaturés.
- les copolymères blocs tels que styrène / éthylène-butène / styrène (SEBS) éventuellement maléisés.

On peut utiliser des mélanges de deux ou plusieurs de ces polyoléfines.

On utilise avantageusement :
- le polypropylène,
- le polyéthylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé,

Il est recommandé si les polyoléfines ont peu ou pas de fonctions pouvant faciliter la compatibilisation, d'ajouter un agent compatibilisant.

L'agent compatibilisant est un produit connu en soi pour compatibiliser les polyamides et les polyoléfines.

On peut citer par exemple :
- le polyéthylène, le polypropylène, les copolymères éthylène propylène, les copolymères éthylène-butène, tous ces produits étant greffés par de l'anhydride maléique ou du méthacrylate de glycidyle.
- les copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé.
- les deux copolymères précédents dans lesquels l'anhydride maléique est remplacé par le méthacrylate de glycidyle,
- les copolymères éthylène / acide (méth)acrylique éventuellement leurs sels,
- le polyéthylène, le propylène ou les copolymères éthylène propylène, ces polymères étant greffés par un produit présentant un site réactif avec les amines ; ces copolymères greffés étant ensuite condensés avec des polyamides ou des oligomères polyamides ayant une seule extrémité amine.

Ces produits sont décrits dans les brevets FR 2 291 225 et EP 342 066 dont le contenu est incorporé dans la présente demande.

La quantité de compatibilisant est la quantité suffisante pour que le mélange de polyamide et de polyoléfine puisse être transformé en film ayant les propriétés barrière et les propriétés mécaniques citées plus haut. Cette quantité est fonction des groupes réactifs contenus dans la polyoléfine et dans l'agent compatibilisant lui-même. L'homme de métier peut déterminer facilement cette quantité. A titre d'exemple, cette quantité peut être de 5 à 20 parties pour 100 parties de mélange polyoléfine/polyamide.

De préférence, le mélange de polyamide et de polyoléfine et éventuellement d'agent compatibilisant se présente sous forme d'une matrice de polyamide contenant des nodules de polyoléfine ou des nodules d'un mélange de polyamide et de polyoléfine. On fabrique ces mélanges de polyamide, de polyoléfine et éventuellement de compatibilisant selon les techniques usuelles de mélange à l'état fondu (bi vis, Buss, monovis).

On produit ensuite le film (A) selon les techniques habituelles.

Avantageusement, le mélange comprend une matrice de polyamide 6 (PA-6) ou 66 (PA-6,6) dans laquelle sont dispersés, soit des nodules d'un mélange de polyéthylène et de copolymère d'éthylène de (méth)acrylate d'alkyl et d'anhydride maléique ou de méthacrylate de glycidyle, soit des nodules de polypropylène.

Dans le cas du polypropylène, on ajoute un comptabilisant qui est avantageusement un copolymère éthylène/propylène majoritaire en nombre de motifs propylène, greffé par l'anhydride maléique, puis condensé ensuite avec des oligomères mono aminés de caprolactame. De tels produits sont décrits dans les brevets US 5 070 145 et EP 564 338.

Ces mélanges de polyamide et de polyoléfine peuvent être plastifiés et éventuellement contenir des charges telles que du noir de carbone, etc.

De préférence, la quantité de polyamide est comprise entre 50 et 75 parties pour 100 parties du mélange polyamide/polyoléfine.

A titre d'exemple, on peut utiliser les mélanges suivants (en % poids) :
1)
   - 55 à 70 % de PA-6.
   - 5 à 15 % d'un copolymère éthylène propylène majoritaire en polypropylène greffé par de l'anhydride maléique puis condensé ensuite avec des oligomères monoaminés de caprolactame.
   - le complément à 100 % en polypropylène.
2)
   - 55 à 70 % de PA-6.
   - 5 à 15 % d'au moins un copolymère de l'éthylène avec (i) un (méth)acrylate d'alkyle ou un ester vinylique d'acide carboxylique insaturé et (ii) un anhydride d'acide carboxylique insaturé ou un époxyde insaturé greffé ou copolymérisé.
   - le complément en polyéthylène.
3)
   - 55 à 70 % de PA-6.
   - 5 à 15 % de polyéthylène ou copolymères de l'éthylène et d'une alphaoléfine greffé par de l'anhydride maléique ou du méthacrylate de glycidyle.
   - le complément en polyéthylène.

Le film est posé sur le sol soit avant de procéder à l'injection de fumigant, soit aussitôt après cette injection. Il est recommandé si on pose le film avant l'injection de ne pas endommager le film avec les injecteurs ou de prévoir un système d'étanchéité.

L'épaisseur du film peut être comprise entre 20 et 150 µm. Selon une première variante, on peut associer au film précédent une couche (B) en polyoléfine, c'est-à-dire que le film utilisé dans l'invention se présente sous forme d'un bicouche. La polyoléfine de cette deuxième couche (B) peut être choisie parmi les polyoléfines du mélange polyamide-polyoléfine du film (A).

Cette deuxième couche est essentiellement utile pour la résistance mécanique de l'ensemble, on utilise avantageusement du polyéthylène.

Avantageusement, le film de cette première variante a une épaisseur de la couche barrière (A) polyamide/polyoléfine de 10 à 50 µm et une épaisseur de la couche (B) de polyéthylène de 10 à 50 µm.

Selon une deuxième variante de l'invention, la couche (A) est disposée entre deux couches (B).

On peut éventuellement dans ces deux variantes, disposer un liant de coextrusion entre les couches (A) et (B).

A titre d'exemple de liant, on peut citer :
- le polyéthylène, le polypropylène, les copolymères de l'éthylène et d'au moins une alpha oléfine, des mélanges de ces polymères, tous ces polymères étant greffés par des anhydrides d'acides carboxyliques insaturés tels que par exemple, l'anhydride maléique. On peut aussi utiliser des mélanges de ces polymères greffés et de ces polymères non greffés.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les epoxydes insaturés ; ces copolymères pouvant être greffés par des anhydrides d'acides dicarboxyliques insaturés tels que l'anhydride maléique ou des epoxydes insaturés tels que le méthacrylate de glycidyle. Ces films peuvent être fabriqués par les techniques habituelles telles que extrusion et coextrusion de gaines, extrusion et coextrusion de cast films.

On peut aussi selon une autre variante, au lieu d'utiliser un liant, incorporer une polyoléfine greffée dans la polyoléfine de la couche (B) pour augmenter l'adhésion entre les couches (A) et (B). On peut obtenir ainsi des adhésions supérieures à 300 g/15 mm. La quantité de polyoléfine greffée peut représenter 10 à 20 % en poids de la couche (B).

### Exemples

Dans les exemples, on a utilisé les produits suivants (les % sont en poids) :
**A1** : désigne un mélange de
   - 60 % de PA-6 de Melt index 2-3 (235° C)
   - 30 % de polypropylène de Melt index 1,5-2 (235° C)
   - 10 % d'un copolymère tronc éthylène/propylène à 12 % d'éthylène, greffé par l'anhydride maléique (1 % d'anhydride par rapport au tronc) puis condensé avec un oligomère monoaminé de caprolactame de degré de polymérisation 22, la quantité de ces oligomères étant de 25 % par rapport au tronc.
**A2** : désigne un mélange de
   - 65 % de PA-6 de Melt index 15-17
   - 27 % de PEBD de Melt index 1 (190° C)
   - 8 % d'un copolymère éthylène acrylate de butyl-anhydride maléique à 5,5 % d'acrylate et 3,6 % d'anhydride, de Melt index 5.
C2 désigne un PA-6 de Melt index 15-17
C3 désigne un PEBD de Melt index 1

### Exemple 1

On dispose un film dans une cellule pour obtenir 2 compartiments. On balaye l'un des compartiments avec du bromure de méthyle (CH₃ Bᵣ) et l'autre avec un courant d'air sec.

Un manomètre différentiel permet de régler le débit pour éviter une surpression ou une dépression sur le film. On mesure par chromatographie en phase gazeuse le flux de CH₃Br qui traverse le film, exprimé par le coefficient de perméabilité, en g/m².h ou en g.50 µm/m².h, et la concentration maximale en CH₃Br, qui est passé dans l'air sec.

Les résultats obtenus à 20° C et 60° C sont rassemblés dans le tableau 1.

**Tableau 1**

| **Perméabilité au bromure de méthyle** | | | | |
|---|---|---|---|---|
| **Température 20° C** | | | | |
| **Film** | **Epaisseur (µm)** | **Coef. Perm. (g/m**^{**2**}**.h)** | **Coef. Perm. (g.50µm/m**^{**2**}**.h)** | **CH3Br maxi (g/m3)** |
| A1 | 63 | 3.50E-03 | 4.40E-03 | 0.053 |
| A2 | 51.9 | 1.80E-03 | 1.90E-03 | 0.026 |
| C2 | 33 | 0.122 | 8.00E-02 | 1.69 |
| C3 | 38 | 11.9 | 9 | 165.2 |

| **Température 60° C** | | | | |
|---|---|---|---|---|
| **Film** | **Epaisseur (µm)** | **Coef. Perm. (g/m**^{**2**}**.h)** | **Coef. Perm. (g.50µm/m**^{**2**}**.h)** | **CH3Br maxi (g/m3)** |
| A1 | 63 | 0.215 | 3.00E-01 | 2.98 |
| A2 | 51.9 | 0.458 | 5.00E-01 | 6.36 |
| C2 | 33 | 0.81 | 5.00E-01 | 11.29 |
| C3 | 38 | 53.22 | 40.5 | 737.1 |

### Exemple 2 - Fumigation de sols

L'essai se déroule en Gironde, dans la zone agricole des Graves. La parcelle est typique de cette région : structure sablo-caillouteuse, sol assez riche en matière organique (3 %), très filtrant.

Le sol est sec, très aéré et a reçu 3 jours avant l'application un apport de fumier moyennement décomposé.

L'application se fait avec une machine équipée de coutres injecteurs espacés d'une trentaine de cm environ.

Le bromure de méthyle est additionné de 2 % de chloropicrine.

Les films étudiés et comparés sont :
- film F1 : film de référence de 50 microns, en polyéthylène C3
- film F2 : film, selon l'invention, constitué d'une couche réalisée en mélange A2 de PA et PE, d'épaisseur 16 µm entre 2 couches de PE C3 d'épaisseur 18 µm.

Les concentrations en bromure de méthyle sont mesurées à l'aide de sondes en cuivre (diamètre 4-6) et d'un appareil utilisant le principe de la thermoconductivité (Gow-mac).

L'essai est réalisé selon la technique d'application par injection à froid avec un paillage en plein de la parcelle. Ainsi, le bromure de méthyle est appliqué à 20 cm de profondeur.

### 3 modalités sont étudiées :

- film F1 avec dose normale : 80 g/m² (F1 - 80)
- film F2 avec dose normale : 80 g/m² (F2 - 80)
- film F2 avec demi-dose : 45 g/m² (F2 - 45)

Ces 3 parcelles ont chacune une surface de 400 m² environ.

La régulation de la quantité de bromure de méthyle apportée au sol est effectuée par un débimètre fixé sur la machine. Le gaz ayant été injecté, on recouvre ensuite le sol avec le film. Puis on mesure sa concentration en fonction du temps et de la profondeur.

Sur chaque parcelle, les concentrations en bromure de méthyle sont suivies de la façon suivante :
- 4 "pôles" de mesures par modalité, soit 4 répétitions : A, B, C, D.
- 2 sondes par pôle, l'une placée à 10 cm de profondeur, l'autre à 25 cm.

Soit un total de 24 points de mesures.

La fréquence des mesures est établie arbitrairement. Cependant, un maximum de mesures est pris durant les toutes premières heures de la fumigation afin de bien encadrer le pic des condensations.

L'ensemble des valeurs permet ensuite de calculer par point de mesure le produit concentration-temps (exprimé en g.h.m-3), seul critère d'efficacité biologique. (CT)

L'essai s'est déroulé durant une période climatique douce mais assez venteuse.

Lors de la désinfection, la température du sol à 10 cm de profondeur était très satisfaisante puisqu'égale à 19;8° C.

Durant la fumigation, la température moyenne du sol a été de 22,3° C.

Les températures sous le film plastique ont oscillé entre 9,5° C et 53,8° C avec une moyenne de 25,6° C.

L'ensemble des mesures relevées durant toute la durée de la fumigation sur les 24 points de mesures est regroupé dans le Tableau 2.

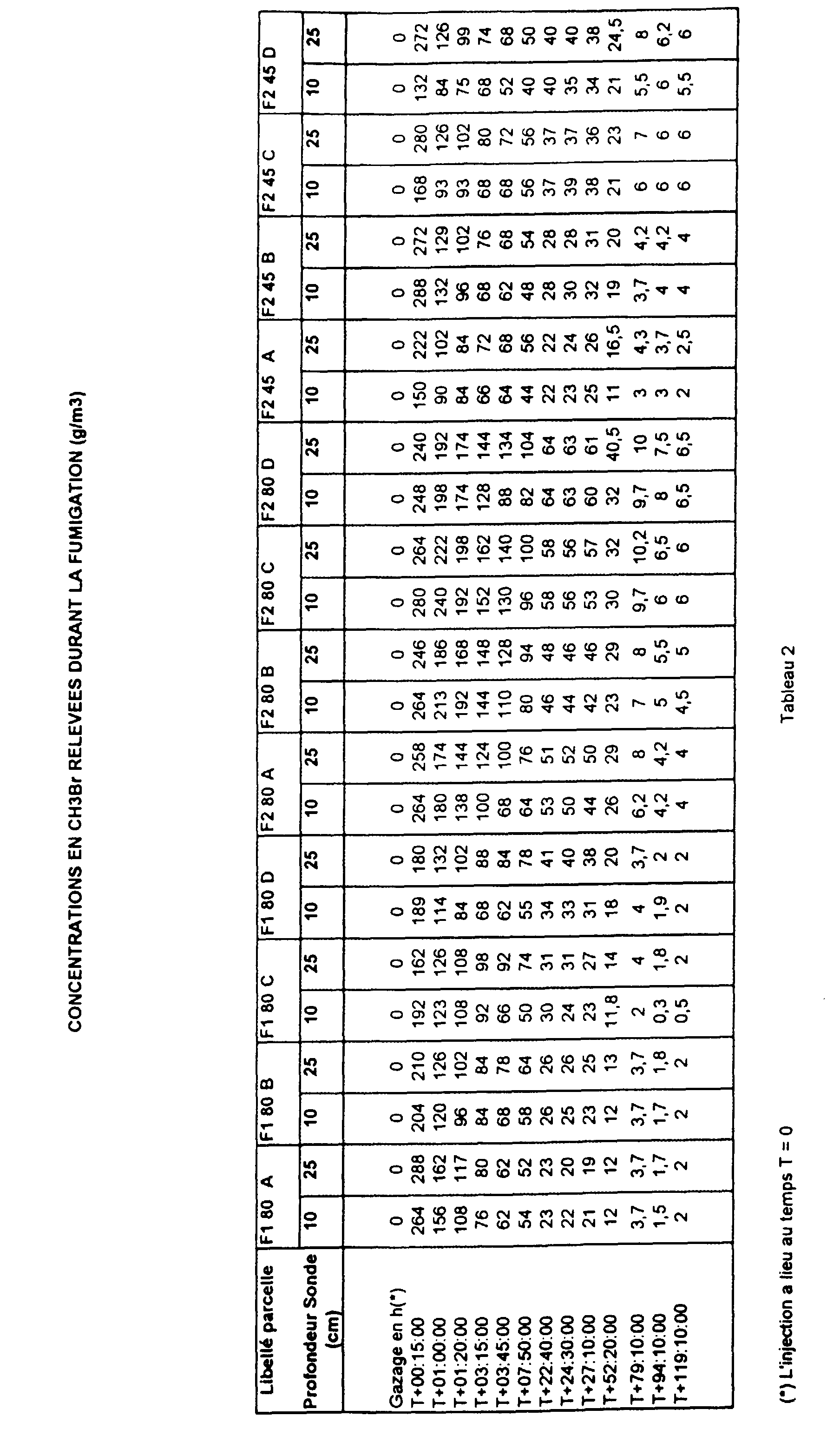

Il y a eu une très bonne diffusion du gaz dans les couches profondes.

Au bout de 120 heures, les concentrations en gaz mesurées sont très faibles.

| **CT obtenus sur la parcelle F1 - 80g.m-**^{**2**} **(concentration x temps en g.h m-**^{**3**}**)** | | | | | | |
|---|---|---|---|---|---|---|
| **Point de mesure Profondeur** | **A** | **B** | **C** | **D** | **Moyenne** | **Ecart-type** |
| 10 cm | 2109 | 2177 | 2078 | 2454 | 2204,5 | 171,4 |
| 25 cm | 2097 | 2325 | 2580 | 2998 | 2500 | 334,45 |

| **CT obtenus sur la parcelle F2 - 80 g.m-**^{**2**} | | | | | | | |
|---|---|---|---|---|---|---|---|
| **Point de mesure Profondeur** | **A** | **B** | **C** | **D** | **Moyenne** | **Ecart-type** | **%augment. par rapport à F1-80 g-2** |
| 10 cm | 3426 | 3678 | 4458 | 4387 | 3986,25 | 443,9 | 45 |
| 25 cm | 3831 | 4064 | 4642 | 4949 | 4371,5 | 445,35 | 43 |

| **CT obtenus sur la parcelle F2 - 45 g.m-**^{**2**} | | | | | | | |
|---|---|---|---|---|---|---|---|
| **Point de mesure Profondeur** | **A** | **B** | **C** | **D** | **Moyenne** | **Ecart-type** | **%augment. par rapport à F1-80 g-2** |
| 10 cm | 1877 | 2453 | 2794 | 2523 | 2411,75 | 385,6 | 8,6 |
| 25 cm | 2258 | 2548 | 2950 | 2995 | 2687,75 | 349,9 | 7 |

A dose égale, le film F2 permet d'obtenir des résultats nettement plus élevés que la référence PE + 80g.m-2 puisque l'augmentation des CT est de 45 % à 10 cm et de 43 % à 25 c.

A demi-dose, le film F2 devance également la référence de quelques points.

Cet essai montre qu'il est tout à fait possible de réduire de manière significative les doses de bromure de méthyle.

En effet, le même niveau d'efficacité est atteint entre la référence et la combinaison film F2 demi-dose, les CT avoisinant les 2500 g.h.m-3.

Enfin, cette expérimentation a révélé que la résistance mécanique de ce film F2 était supérieure aux films usuels.

## Revendications

1. Procédé de traitement d'un sol agricole par fumigation dans lequel on dispose un film sur le sol agricole dans lequel on a injecté un fumigant, caractérisé en ce que ledit film est constiuté d'une couche (A) d'un mélange comprenant au moins un polyamide et au moins une polyoléfine.

2. Procédé selon la revendication 1 dans lequel le film comprend une deuxième couche (B) constituée essentiellement d'une polyoléfine.

3. Procédé selon la revendication 1 dans lequel le film comprend la couche (A) disposée entre deux couches (B) constituées essentiellement d'une polyoléfine.

4. Procédé selon la revendication 2 ou 3 dans lequel un liant de coextrusion est disposé entre les couches (A) et (B).

5. Procédé selon la revendication 2 ou 3 dans lequel une polyoléfine greffée est incorporée dans la polyoléfine de la couche (B).

6. Procédé selon l'une des revendications 1 à 5 dans lequel la quantité de polyamide du mélange de polyamide et de polyoléfine de la couche (A) est comprise entre 50 et 75 parties pour 100 parties du mélange.

## Patentansprüche

1. Verfahren zur Behandlung eines landwirtschaftlichen Bodens durch Begasung, bei dem eine Folie auf dem landwirtschaftlichen Boden angeordnet wird, in die ein Begasungsmittel injiziert worden ist, dadurch gekennzeichnet, daß die Folie aus einer Schicht (A) aus einem Gemisch besteht, das mindestens ein Polyamid und mindestens ein Polyolefin enthält.

2. Verfahren nach Anspruch 1, wobei die Folie eine zweite Schicht (B) umfaßt, die im wesentlichen aus einem Polyolefin besteht.

3. Verfahren nach Anspruch 1, wobei die Folie die Schicht (A) umfaßt, die zwischen zwei Schichten (B) angeordnet ist, die im wesentlichen aus einem Polyolefin bestehen.

4. Verfahren nach Anspruch 2 oder 3, wobei ein Coextrusionsbindemittel zwischen den Schichten (A) und (B) angeordnet wird.

5. Verfahren nach Anspruch 2 oder 3, wobei ein gepfropftes Polyolefin in das Polyolefin der Schicht (B) eingearbeitet wird.

6. Verfahren nach einem der Ansprüche 1 bis 5, wobei die Polyamidmenge, die in dem Gemisch aus Polyamid und Polyolefin der Schicht (A) enthalten ist, im Bereich von 50 bis 75 Teilen pro 100 Teile des Gemischs liegt.

## Claims

1. Process for treating agricultural land by fumigation, wherein a film is placed onto the agricultural land into which a fumigant has been injected, characterized in that the said film consists of a layer (A) of a mixture comprising at least one polyamide and at least one polyolefin.

2. Process according to Claim 1, in which the film comprises a second layer (B) consisting essentially of a polyolefin.

3. Process according to Claim 1, in which the film comprises the layer (A) placed between two layers (B), consisting essentially of a polyolefin.

4. Process according to Claim 2 or 3, in which a coextrusion binder is placed between the layers (A) and (B).

5. Process according to Claim 2 or 3, in which a grafted polyolefin is incorporated into the polyolefin of the layer (B).

6. Process according to one of Claims 1 to 5, in which the amount of polyamide in the mixture of polyamide and polyolefin of the layer (A) is between 50 and 75 parts per 100 parts of the mixture.
